# NEUE EUROPÄISCHE PATENTSCHRIFT

(11) **EP 2 010 380 B2**
(45) Veröffentlichungstag und Bekanntmachung des Hinweises auf die Entscheidung über den Einspruch: **30.12.2015**
(45) Hinweis auf die Patenterteilung: 23.12.2009
(21) Anmeldenummer: 07727986.7
(22) Anmeldetag: 11.04.2007
(51) Int. Cl.: B32B 9/02

(54) **MEHRSCHICHTFOLIE UND VERFAHREN ZU DEREN HERSTELLUNG**
MULTILAYERED FILM AND METHOD FOR MANUFACTURING SAME
FEUILLE MULTICOUCHE ET PROCÉDÉ POUR SA FABRICATION

(30) Priorität: 14.04.2006 DE 102006018060
(43) Veröffentlichungstag der Anmeldung: 07.01.2009
(73) Patentinhaber: BIOTEC Biologische Naturverpackungen GmbH & Co. KG, 46446 Emmerich (DE)
(72) Erfinder: SCHMIDT, Harald, 46446 Emmerich (DE); HESS, Christoph, 47533 Kleve (DE); MATHAR, Johannes, NL-7041 Gp 's Heerenberg (NL); HACKFORT, Ralf, 46446 Emmerich (DE)
(74) Vertreter: Cohausz & Florack
(86) Internationale Anmeldenummer: PCT/EP2007/053518
(87) Internationale Veröffentlichungsnummer: WO 2007/118828

(56) Entgegenhaltungen:
- WO-A-2004/052646
- FR-A1- 2 791 603

## Beschreibung

Die Erfindung betrifft eine Mehrschichtfolie, insbesondere für Verpackungszwecke, die mindestens zwei Schichten A und B umfasst. Die Erfindung betrifft ferner ein Verfahren zur Herstellung der Mehrschichtfolie sowie aus dieser hergestellte Verpackungsmaterialien.

Mehrschichtfolien der eingangs genannten Art sind allgemein bekannt und werden beispielsweise für die Verpackung von Lebensmitteln und anderen Gütern verwendet. Für die Verpackung von sauerstoffempfindlichen Lebensmitteln ist es ferner erforderlich, dass die Folien eine geringe Sauerstoffpermeabilität aufweisen. Derartige Folien werden auch als "Barrierefolien" bezeichnet. Sie finden beispielsweise Verwendung bei der Verpackung von frischem Fleisch bzw. Obst und Gemüse, deren Haltbarkeit durch gezielte-Einstellung der Gasbarriere, insbesondere der Sauerstoff- und/oder Wasserdampfbarriere, erheblich verlängert werden kann. Der ganz überwiegende Teil der heute in der Verpackungsindustrie verwendeten Barrierefolien besteht aus Kunststoffen, die auf petrochemischer Basis gewonnen werden.

Aus wirtschaftlichen und ökologischen Erwägungen besteht zunehmend Bedarf an geeigneten Folien, die aus nachwachsenden Rohstoffen hergestellt und/oder biologisch abbaubar sind.

Der vorliegenden Erfindung liegt daher die Aufgabe zugrunde, eine Mehrschichtfolie der eingangs genannten Art bereit zu stellen, welche gute Barriereeigenschaften besitzt und welche aus nachwachsenden Rohstoffen hergestellt und/oder biologisch abbaubar ist. Ferner soll die Folie eine ausreichende mechanische Festigkeit aufweisen und darüber hinaus feuchtigkeitsunempfindlich und preisgünstig sein und je nach Anwendung eine gute Transparenz aufweisen.

Diese Aufgabe wird erfindungsgemäß durch eine Mehrschichtfolie der im Anspruch 1 definierten Art gelöst.

Vorteilhafte Ausgestaltungen der Erfindung sind in den Unteransprüchen beschrieben.

Wesentliches Merkmal der erfindungsgemäßen Mehrschichtfolie ist, dass ihr Schichtaufbau einerseits thermoplastischen Polyester (Schicht A) und andererseits thermoplastische Stärke (Schicht B) enthält. Überraschend wurde festgestellt, dass Mehrschichtfolien, welche diese Materialkombination enthalten, außergewöhnlich gute Eigenschaften als Verpackungsfolien aufweisen.

Die erfindungsgemäßen Folien zeichnen sich durch ausgezeichnete Barriereeigenschaften aus und weisen insbesondere eine geringe Sauerstoff- und Kohlendioxiddurchlässigkeit auf. Die Folien weisen ferner eine hervorragende mechanische Festigkeit sowie eine geringe Feuchtigkeitsempfindlichkeit auf. Sofern gewünscht lassen sich mit dem erfindungsgemäßen Schichtaufbau ferner tiefziehfähige Folien mit ausgezeichneter Transparenz herstellen.

Die erfindungsgemäße Mehrschichtfolie zeichnet sich durch eine ausgezeichnete mechanische Festigkeit aus und läßt sich hervorragend zur Herstellung von Verpackungen verarbeiten. So lassen sich mit dem erfindungsgemäßen Schichtaufbau beispielsweise Zugfestigkeitswerte nach DIN 53455 im Bereich 10 bis 40 N/mm², insbesondere 15 bis 30 N/mm², erreichen.

Die erfindungsgemäßen Mehrschichtfolien zeichnen sich ferner durch ausgezeichnete Barriereeigenschaften aus. So besitzt die erfindungsgemäße Mehrschichtfolie vorzugsweise eine Sauerstoffdurchlässigkeit nach ASTM F 1927-98 bei 23 °C, 50 % r.h. und 400 µm Foliendicke von 1 bis 50, insbesondere 1,5 bis 20 cm³/m² d, weiter insbesondere 2 bis 10 cm³/m² d. Ferner weist die erfindungsgemäße Mehrschichtfolie vorzugsweise eine Wasserdampfdurchlässigkeit nach ASTM F 1249 bei 23 °C, 75 r.F. und 400 µm Foliendicke von 1 bis 100, insbesondere 2 bis 10 cm³/m² d auf. Schließlich besitzt die erfindungsgemäße Mehrschichtfolie vorzugsweise eine Kohlendioxiddurchlässigkeit nach ASTM D 1434 bei 23 °C, 50 r.F. und 400 µm Foliendicke von 0,5 bis 5, insbesondere 1 bis 2,5 cm³/m² d. Aufgrund der vorstehend genannten Barriereeigenschaften ist die erfindungsgemäße Mehrschichtfolie hervorragend als Barrierefolie für Verpackungszwecke geeignet.

Die erfindungsgemäße Mehrschichtfolie kann eine beliebige Dicke aufweisen, wobei die Dicke der Folie maßgeblich von dem beabsichtigten Anwendungszweck und den gewünschten Folieneigenschaften abhängt. Für Verpackungszwecke weist die Folie vorzugsweise eine Gesamtdicke von 10 bis 2000 µm, insbesondere 100 bis 2000 µm, noch bevorzugter 200 bis 800 µm, auf, wobei die einzelnen Schichten vorzugsweise jeweils eine Dicke von 5 bis 1000 µm, insbesondere 10 bis 1000 µm, bevorzugt 20 bis 700 µm, noch bevorzugter 10 bis 700 µm besitzen. Blasfolien auf Mehrschichtbasis weisen vorzugsweise eine Gesamtdicke von 30 bis 100 µm auf.

Die aus den erfindungsgemäßen Mehrschichtfolien hergestellten Verpackungen können eine beliebige Dicke aufweisen. Aus den erfindungsgemäßen Mehrschichtfolien hergestellte Schalen zur Verpackung von Lebensmitteln weisen vorzugsweise eine Gesamtdicke von 350 bis 400 µm auf, die entsprechenden Deckelfolien vorzugsweise eine Dicke von 30 bis 100 µm.

Die erfindungsgemäße Mehrschichtfolie umfasst mindestens eine Schicht A und mindestens eine Schicht B. Darüber hinaus kann die erfindungsgemäße Folie beliebige weitere Schichten umfassen. Gemäß einer besonders bevorzugten Ausführungsform der Erfindung umfasst die erfindungsgemäße Mehrschichtfolie mindestens zwei Schichten A sowie eine Schicht B, wobei die Schicht B vorzugsweise zwischen den beiden Schichten A angeordnet ist. Eine solche Mehrschichtfolie besitzt den folgenden Schichtaufbau: Schicht A - Schicht B - Schicht A.

Je nach beabsichtigten Anwendungszweck kann die Folie noch weitere Schichten A und/oder B umfassen. Möglich ist beispielsweise auch eine Mehrschichtfolie mit folgendem Schichtaufbau: Schicht A - Schicht B - Schicht A - Schicht B - Schicht A. Aufgrund der doppelt vorgesehenen Schicht B hat eine solche Folie noch weiter verbesserte Barriereigenschaften. Zwischen den einzelnen Schichten kann darüber hinaus eine Haftvermittlerschicht H angeordnet sein.

Erfindungsgemäß ist vorgesehen, dass die Schicht A der Mehrschichtfolie mindestens einen thermoplastischen Polyester enthält. Die Auswahl des thermoplastischen Polyesters ist dabei nicht beschränkt. Es kommen sowohl aliphatische als auch aromatische Polyester sowie deren Copolymere und/oder Mischungen in Frage.

Thermoplastische Polyester sind allgemein bekannt und beispielsweise in Oberbach et al. "Saechtling Kunststoff Taschenbuch", 29. Aufl., Hanser-Verlag, München (2004) beschrieben.

Gemäß einer bevorzugten Ausführungsform der Erfindung handelt es sich bei dem in der Schicht A enthaltenen thermoplastischen Polyester um einen gemäß EN 13432 biologisch abbaubareren thermoplastischen Polyester.

Insbesondere kann es sich bei dem thermoplastischen Polyester um ein Biopolymer auf Basis einer oder mehrerer Hydroxycarbonsäuren handeln.

Erfindungsgemäß besonders geeignete thermoplastische Polyester sind Poly[hydroxyalkanoate] (PHA), Poly[älkylensuccinate] (PAS) wie z.B. Poly[butylensuccinat] (PBS), Poly[alkylenterephtalate] (PAT) wie z.B. Poly[ethylenterephthalat] (PET), aliphatisch-aromatischen Copolyester und/oder Poly[p-dioxanon] (PPDO) sowie Copolymere und Mischungen hiervon. Denkbar ist auch der Einsatz von Biopropandiol(Bio-PDO)-Polyester allein oder in Kombination mit anderen thermoplastischen Polyestern.

Gemäß einer besonders bevorzugten Ausführungsform der Erfindung enthält Schicht A mindestens ein Poly[hydroxyalkanoat] (PHA) als thermoplastischen Polyester. Beispiele für geeignete Poly[hydroxyalkanoate] sind Poly[hydroxyethanoat] wie z.B. Polyglycolsäure (PGA), Poly[hydroxypropanoat] wie z.B. Polymilchsäure bzw. Polylactid (PLA), Poly[hydroxybutanoat] wie z.B. Polyhydroxybuttersäure (PHB), Poly[hydroxypentanoat] wie z.B. Polyhydroxyvalerat (PHV) und/oder Poly[hydroxyhexanoat] wie z.B. Polycaprolacton (PCL), sowie Copolymere und Mischungen hiervon.

Ein erfindungsgemäß besonders geeigneter thermoplastischer Polyester ist Polymilchsäure bzw. Polylactid (PLA). PLA ist ein biologisch abbaubarer Polyester, der über eine mehrstufige Synthese aus Zucker hergestellt werden kann. Dabei wird Zucker zu Milchsäure fermentiert und diese in der Regel über die Zwischenstufe des Dilactids zu PLA polymerisiert. PLA ist transparent, kristallin, steif, besitzt hohe mechanische Festigkeit und kann mit den herkömmlichen thermoplastischen Verfahren verarbeitet werden. Geeignete Polymere auf Basis von PLA sind beispielsweise beschrieben in den Druckschriften US 6 312 823, US 5 142 023, US 5 274 059, US 5 274 073, US 5 258 488, US 5 357 035, US 5 338 822 und US 5 359 026. Erfindungsgemäß kann PLA sowohl als Virgin-Material als auch in Form von Rezyklat eingesetzt werden.

Ein weiterhin besonders geeigneter thermoplastischer Polyester ist Polyhydroxybuttersäure (PHB). PHB wird in der Natur von zahlreichen Bakterien als Speicher- und Reservestoff gebildet werden. Demgemäß kann die technische Herstellung von PHB durch Bakterien erfolgen. Geeignete Polymere auf Basis von PHB sind beispielsweise beschrieben in den Druckschriften US 4 393 167, US 4 880 592 und US 5 391 423.

Als Material für Schicht A der vorliegenden Erfindung kommen insbesondere die in der Druckschrift US 6 312 823 beschriebenen "aliphatischen Polyesterpolymere" in Frage, auf deren Beschreibung hier ausdrücklich Bezug genommen und die zum Gegenstand der vorliegenden Offenbarung gemacht wird.

Geeignete Copolymere bzw. Mischungen der genannten thermoplastischen Polyester sind beispielsweise Polycaprolacton / Polybutylensuccinatmischungen odercopolymere (PCL/PBS), Polyhydroxybuttersäure / Polyhydroxyvaleratcopolymere (PHB/PHV), Polyhydroxybutyratvalerat (PHBV), Polybutylensuccinat / Polybutylenadipatmischungen oder -copolymere (PBS/PBA), Polyethylenterephtalat / Polyethylensuccinatcopolymere (PET/PES) und/oder Polybutylenterephthalat / Polybutylenadipatcopolymere (PBT/PBA).

Schicht A kann neben dem thermoplastischen Polyester und dem Verarbeitungshilfsmittel noch weitere Komponenten enthalten. Insbesondere kann die Schicht A aus einer Mischung von unterschiedlichen Polymeren bestehen. Schicht A kann darüber hinaus übliche Additive wie zum Beispiel Weichmacher, Stabilisatoren, Antiflammittel und/oder Füllstoffe enthalten. Ferner kann der Schicht A ein Haftvermittler zugesetzt werden, der insbesondere zur Verbesserung der Haftung zwischen Schicht A und B dienen kann. Vorzugsweise enthält Schicht A thermoplastischen Polyester in einer Menge von mindestens 20 Gew.%, insbesondere mindestens 30 Gew.% oder mindestens 40 Gew.%, noch bevorzugter mindestens 50 Gew.% oder mindestens 60 Gew.%, noch weiter bevorzugt mindestens 80 Gew.% und am meisten bevorzugt mindestens 90 Gew.%. oder mindestens 95 Gew.%, bezogen auf das Gesamtgewicht von Schicht A. Weiter bevorzugt besteht Schicht A im Wesentlichen aus thermoplastischen Polyester.

Erfindungsgemäß einsetzbare Verarbeitungshilfsmittel sind dem Fachmann allgemein bekannt.

Erfindungsgemäß geeignete Verarbeitungshilfsmittel sind Polymere, die ein Polymergerüst (Backbone) aufweisen, welches mit reaktiven Gruppen funktionalisiert bzw. modifiziert ist. Derartige Polymere werden auch als "funktionalisierte Polymere" bezeichnet. Die erfindungsgemäß eingesetzten Verarbeitungshilfsmittel haben vorzugsweise ein Molekulargewicht von bis zu 200.000, insbesondere bis zu 100.000.

Als Polymergerüst (Backbone) für das Verarbeitungshilfsmittel kommen prinzipiell alle Polymere in Betracht, die mit mindestens einer Polymerkomponente (z.B. PLA) aus Schicht A mischbar sind. Mögliche Polymergerüste für das Verarbeitungshilfsmittel sind beispielsweise Ethylenvinylacetat (EVA), Polyethylen (PE), Polypropylen (PP), Ethylenacrylate, Polyester (z.B. PLA) sowie Mischungen und/oder Copolymere (z.B. Polyethylen-Methylacrylat-Copolymer oder Polyethylen-Butylacrylat-Copolymer) davon.

Als reaktive Gruppe für die erfindungsgemäß eingesetzten Verarbeitungshilfsmittel kommen prinzipiell alle reaktiven Gruppen in Betracht, die geeignet sind, mit mindestens einer Polymerkomponente (z.B. TPS) aus Schicht B chemisch zu reagieren. Geeignete reaktive Gruppen sind beispielsweise Maleinsäureanhydrid und/oder andere Anhydride geeigneter Carbonsäuren oder Dicarbonsäuren bzw. anderer mehrbasiger Säuren.

Vorzugsweise ist das Polymergerüst (Backbone) mit reaktiven Gruppen in einer Menge von 0,01 bis 7 Gew.%, insbesondere 0,1 bis 5 Gew.%, noch bevorzugter 0,3 bis 4 Gew.%, bezogen auf die Gesamtzusammensetzung des Verarbeitungshilfsmittels, modifiziert. Vorzugsweise sind die reaktiven Gruppen auf das Polymergerüst (Backbone) aufgepfropft.

Derartige Verarbeitungshilfsmittel sind beispielsweise unter den Handelsnamen Lotader® und Orevac® (Arkema Inc., USA), Fusabond®, Biomax strong® und Bynel® (DuPont, USA) und Plexar® (Equistar Chemical Company, USA) kommerziell erhältlich.

Das Verarbeitungshilfsmittel wird in einer Menge von bis zu 5 Gew.%, insbesondere 0,01 bis 2 Gew.%, weiter bevorzugt 0,1 bis 1,5 Gew.%, noch bevorzugter 0,2 bis 1 Gew.% und am bevorzugtesten in einer Menge von weniger als 1 Gew.%, bezogen auf die Gesamtzusammensetzung der jeweiligen Schicht, eingesetzt. Gemäß einer besonders bevorzugten Ausführungsform der Erfindung wird als Verarbeitungshilfsmittel für Schicht A ein maleinsäureanhydrid-modifiziertes Polymer auf Ethylenbasis, insbesondere ein maleinsäureanhydrid-modifiziertes Polyethylen-Alkylacrylat-Copolymer, eingesetzt.

Erfindungsgemäß wurde festgestellt, dass durch den Einsatz der genannten Verarbeitungshilfsmittel nicht nur die Verarbeitbarkeit der eingesetzten Polymere (Fließverhalten im Extruder, Homogenität der Schmelze) verbessert werden kann, sondern auch ein erheblich verbesserter Haftverbund zwischen den Schichten erzielt werden kann.

Erfindungsgemäß ist ferner vorgesehen, dass Schicht B der Mehrschichtfolie thermoplastische Stärke enthält.

Thermoplastische Stärke bzw. thermoplastisch verarbeitbare Stärke (TPS) ist allgemein bekannt und beispielsweise in den Druckschriften EP 0 397 819 B1, WO 91/16375 A1, EP 0 537 657 B1 und EP 0 702 698 B1 ausführlich beschrieben. Mit einem Marktanteil von etwa 80 Prozent bildet thermoplastische Stärke den wichtigste und gebräuchlichsten Vertreter der Biokunststoffe. Thermoplastische Stärke wird im allgemeinen aus nativer Stärke wie zum Beispiel Karstoffelstärke hergestellt. Um native Stärke thermoplastisch verarbeitbar zu machen, werden ihr Plastifizierungsmittel wie Sorbitol und/oder Glycerin hinzugefügt. Thermoplastische Stärke zeichnet sich durch einen geringen Wassergehalt aus, der vorzugweise weniger als 6 Gew %, bezogen auf das Gesamtgewicht der thermoplastischen Stärke, beträgt. Ferner zeichnet sich thermoplastische Stärke durch ihre vorzugsweise im Wesentlichen amorphe Struktur aus.

Gemäß einer bevorzugten Ausführungsform der Erfindung wird Schicht B erhalten, indem man mindestens teilweise von thermoplastisch verarbeitbarer Stärke mit einem Wassergehalt von weniger 6 Gew.%, vorzugsweise weniger als 4 Gew.%, insbesondere weniger als 3 Gew.%, bezogen auf die Gesamtzusammensetzung der Stärke, ausgeht.

Es wurde festgestellt, dass bei Verwendung von thermoplastisch verarbeitbarer Stärke mit den angegebenen Wassergehalten (< 6 Gew.%) ein verbessertes Fließverhalten im Extruder sowie eine verringerte Mikrobläschenbildung in der Schicht erzielt werden kann. Vorzugsweise weist die eingesetzte thermoplastisch verarbeitbare Stärke jedoch einen Wassergehalt von wenigstens 1 Gew.%, insbesondere wenigstens 1,5 Gew.% auf, da es sonst leicht zu thermisch bedingten Oxidationsprozessen und damit einhergehend zu unerwünschten Verfärbungen des Produktes kommen kann. Umgekehrt kann es bei einem Wassergehalt größer etwa 6 Gew.% leicht zu einer vermehrten Mikrobläschenbildung kommen, was ebenfalls unerwünscht ist.

Die in Schicht B enthaltene thermoplastische Stärke ist vorzugsweise dadurch charakterisiert, dass eine aus der thermoplastischen Stärke hergestellte Folie eine Zugfestigkeit gemäß DIN 53455 von 2 bis 10 N/mm², insbesondere von 4 bis 8 N/mm^{2,} und/oder eine Reißdehnung gemäß DIN 53455 von 80 bis 200 %, insbesondere von 120 bis 180 %, aufweist.

Gemäß einer weiteren bevorzugten Ausführungsform der Erfindung ist die thermoplastische Stärke erhältlich durch: (a) Mischen von Stärke und/oder einem Stärkederivat mit mindestens 15 Gew.% eines Weichmachers wie zum Beispiel Glycerin und/oder Sorbitol, (b) Zuführen von thermischer und/oder mechanischer Energie und (c) wenigstens teilweises Entfernen des natürlichen Wassergehalts der Stärke oder des Stärkederivats auf einen Wassergehalt von weniger 6 Gew.%.

Schicht B kann neben thermoplastischer Stärke noch weitere Komponenten enthalten. Insbesondere kann Schicht B aus einer Mischung von unterschiedlichen Polymeren bestehen. Schicht B kann darüber hinaus übliche Additive wie zum Beispiel Weichmacher, Verarbeitungshilfsmittel, Stabilisatoren, Antiflammmittel und/oder Füllstoffe, wie oben für Schicht A beschrieben, enthalten. Insbesondere kann Schicht B geeignete Verarbeitungshilfsmittel enthalten, wie sie oben im Zusammenhang mit Schicht A näher beschrieben sind. Ferner kann der Schicht B ein Haftvermittler zugesetzt werden, der insbesondere zur Verbesserung der Haftung zwischen Schicht B und A dienen kann.

Vorzugsweise enthält Schicht B thermoplastische Stärke in einer Menge von mindestens 20 Gew.%, insbesondere mindestens 30 Gew.% oder mindestens 40 Gew.%, noch bevorzugter mindestens 50 Gew.% oder mindestens 60 Gew.%, noch weiter bevorzugt mindestens 80 Gew.% und am meisten bevorzugt mindestens 90 Gew.%. oder mindestens 95 Gew.%, bezogen auf das Gesamtgewicht von Schicht B. Weiter bevorzugt besteht Schicht B im Wesentlichen aus thermoplastischer Stärke.

Gemäß einer Ausführungsform der Erfindung bestehen sowohl Schicht A als auch Schicht B im wesentlichen aus thermoplastischem Polyester bzw. aus thermoplastischer Stärke.

Weiter vorzugsweise besteht Schicht B im Wesentlichen aus einem Polymer-Blend, welcher thermoplastische Stärke und mindestens ein weiteres thermoplastisches Material, insbesondere thermoplastischen Polyester, enthält. Als weiteres thermoplastisches Material können insbesondere biologisch abbaubare Polymere wie Polyester, Polyesteramide, Polyesterurethane und/oder Polyvinylalkohol zugesetzt werden. Das weitere thermoplastische Material, insbesondere der thermoplastische Polyester, kann in dem Polymer-Blend ferner in Form von Rezyklat der Mehrschichtfolie enthalten sein. Es ist daher möglich, die Schicht B aus thermoplastischer Stärke und einem bestimmten Anteil von Rezyklat der Mehrschichtenfolie herzustellen, wobei das Rezyklat beispielsweise aus bei der Herstellung der erfindungsegmäßen Folie anfallenden Schnittresten gewonnen werden kann. Das weitere thermoplastische Material, inbesondere der thermoplastische Polyester, ist in dem Polymer-Blend vorzugsweise in einer Menge von 1 bis 80 Gew.%, insbesondere 5 bis 30 Gew.%, bezogen auf das Gesamtgewicht des Polymer-Blends, enthalten.

Eine erfindungsgemäß besonders bevorzugte Mehrschichtfolie ist eine Dreischichtfolie vom Typ A-B-A, wobei Schicht A aus einem Polymer auf Basis von PHA (insbesondere PLA) und Schicht B aus einem Polymer auf Basis von thermoplastischer Stärke (bzw. einem Polymerblend enthaltend thermoplastische Stärke) besteht.

Die Herstellung der erfindungsgemäßen Mehrschichtfolie kann nach beliebigen Herstellungsverfahren wie zum Beispiel Kalandrieren, Extrudieren oder auch durch Gießen erfolgen. Derartige Herstellungsverfahren sind dem Fachmann allgemein bekannt und beispielsweise in J. Nentwig "Kunststoff-Folien", 2. Aufl., Hanser Verlag, Berlin (2000), Seiten 39 bis 63 beschrieben.

Vorzugsweise werden die erfindungsgemäßen Mehrschichtfolien durch Extrusion, insbesondere durch Blasfolienextrusion, Flachfolienextrusion, Cast-Folien-Extrusion und/oder Blasformen, gebildet. Diese Herstellungsverfahren sind dem Fachmann allgemein bekannt. Eine ausführliche Beschreibung dieser Herstellungsverfahren findet sich beispielsweise in J. Nentwig uKunststoff-Folien", 2. Aufl., Hanser Verlag, Berlin (2000), S. 45 bis 60, auf welche ausdrücklich Bezug genommen und die zum Gegenstand der vorliegenden Offenbarung gemacht wird. Die dort beschriebenen Herstellungsbeispiele sind auch auf die Herstellung der erfindungsgemäßen Mehrschichtfolie übertragbar. Dabei können sowohl einzelne als auch sämtliche Schichten der Folie durch Extrusion gebildet werden. Vorzugsweise werden sämtliche Schichten der Folie durch Extrusion gebildet.

Gemäß einer besonders bevorzugten Ausführungsform der Erfindung wird die erfindungsgemäße Mehrschichtfolie durch Coextrusion gebildet. Derartige Coextrusions- oder Mehrschichtextrusionsverfahren sind dem Fachmann allgemein bekannt. Eine Beschreibung des Coextrusionsverfahrens findet sich beispielsweise in J. Nentwig "Kunststoff-Folien", 2. Aufl., Hanser Verlag, Berlin (2000), S. 58 bis 60, auf welche ausdrücklich Bezug genommen und die zum Gegenstand der vorliegenden Offenbarung gemacht wird. Die dort beschriebenen Herstellungsbeispiele sind auch auf die Herstellung der erfindungsgemäßen Mehrschichtfolie übertragbar.

Demgemäß betrifft die vorliegende Erfindung ferner ein Verfahren zur Herstellung einer Mehrschichtfolie, wobei die Mehrschichtfolie mindestens eine Schicht A, mindestens eine Schicht B sowie gegebenenfalls weitere Schichten, insbesondere gegebenenfalls mindestens eine weitere Schicht A, umfasst, gekennzeichnet durch folgende Schritte:
(a) Extrudieren eines Materials enthaltend mindestens einen thermoplastischen Polyester zu einer Folie, wodurch mindestens eine Schicht A gebildet wird;
(b) Extrudieren eines Materials enthaltend thermoplastisch verarbeitbare Stärke zu einer Folie, wodurch mindestens eine Schicht B gebildet wird; und
(c) zumindest teilweises flächiges Verbinden der einzelnen Schichten, wodurch eine Mehrschichtfolie gebildet wird.

Die einzelnen Verfahrensschritte (a) bis (c) werden vorzugsweise simultan im Coextrusionsverfahren durchgeführt, insbesondere durch Blasfolienextrusion, Flachfolienextrusion, Cast-Folien-Extrusion und/oder Blasformen.

Nach ihrer Herstellung kann die Mehrschichtfolie je nach Anwendungszweck in Teile mit den gewünschten Abmessungen geschnitten werden. Die beim Zuschnitt anfallenden Schnittreste können zumindest teilweise dem Material für die Extrusion von Schicht B in Schritt (b) zugeführt werden und somit als Rezyklat dienen.

Schließlich betrifft die Erfindung eine Verpackung für Lebensmittel, insbesondere für Frischfleisch, Käse, frisches Obst oder Gemüse, Backwaren, Getränke und/oder Kaffee, welche die erfindungsgemäße Mehrschichtfolie umfasst.

Nachfolgend wird die Erfindung anhand von Ausführungsbeispielen näher beschrieben.

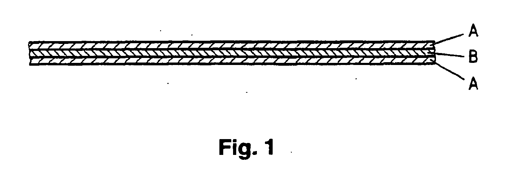

Die einzige Figur zeigt exemplarisch eine Schnittansicht einer erfindungsgemäßen Mehrschichtfolie mit einem Schichtaufbau vom Typ A-B-A.

### Beispiel 1

### Herstellung von thermoplastischer Stärke für die Mittelschicht (Schicht B)

Ein Gemisch aus nativer Kartoffelstärke (63 Gew.%), Glycerin (23 Gew.%) und Sorbitol (14 Gew.%) wurde in einen Zweiwellenextruder eingefüllt. Das Gemisch wurde im Extruder in einem Temperaturbereich von 130 bis 160 °C intensiv gemischt, wobei die Schmelze gleichzeitig entgast wurde um dem Gemisch Wasser zu entziehen. So entsteht eine homogene Schmelze die abgezogen und granuliert werden kann. Der Wassergehalt der in der beschriebenen Weise homogenisierten, thermoplastisch verarbeitbaren Masse liegt zwischen 3 und 4 Gew.%.

Durch das Mischen und Homogenisieren der nativen Stärke mit Glycerin und Sorbitol werden kristalline Strukturen der Stärke aufgebrochen, so dass die entstehende, thermoplastische Stärke weitgehend amorph vorliegt. Im Unterschied hierzu weist destrukturierte Stärke, welche aus nativer Stärke z.B. durch Erwärmen in Wasser hergestellt werden kann, noch eine gewisse Kristallinität auf.

### Beispiel 2

### Herstellung einer Dreischichtfolie (Flachfolie)

Hergestellt wurde eine Dreischichtfolie (A-B-A), bestehend aus Polymilchsäure (PLA) / thermoplastischer Stärke (TPS) / PLA. Als Stärke wurde die in, Ausführungsbeispiel 1 hergestellte, thermoplastische Glycerin/Sorbitol-Stärke mit einem Wassergehalt von 3 bis 4 Gew.% verwendet. Die eingesetzte Polymilchsäure (PLA-Granulat, *Nature Works*) wies einen D-Anteil von 1,4 % auf.

Die beiden Materialien (PLA und TPS) wurden simultan mit einer Coextrusionsanlage zur Dreischichtfolie gefahren. Hierzu wurde die TPS in einem Einwellenextruder mit einem L/D-Verhältnis von 33 in einem Temperaturbereich von 140 bis 190 °C aufgeschmolzen. Der Extruder lief mit einer Drehzahl von 100 U/min und erzeugte, bei einem Durchsatz von 25 kg/h, einen Massedruck von 130 bar. Parallel hierzu wurde in einem zweiten Einwellenextruder (L/D = 30, Temperatur 200 °C, Drehzahl 20 U/min, Massedruck 100 bar, Durchsatz 10 kg/h) PLA aufgeschmolzen (Schmelzetemperatur 177 °C). Beide Schmelzen wurden in einem Coex-Adapter vereinigt, wobei der PLA-Schmelzestrom aufgeteilt und je hälftig über bzw. unter die Stärkeschicht geführt wurde (-> Außenschichten A). Das so erzeugte Dreischichtsystem wurde durch eine Breitschlitzdüse (T = 190 °C) mittels temperierbarer Walzen (T = 25 °C, V = 3 m/min) abgezogen, auf Breite geschnitten und zur Rolle gewickelt.

Die Gesamtdicke 400 µm der so erzeugten Dreischichtfolie setzte sich zusammen aus 2 x 50 µm (Außenschichten A) und 300 µm (Mittelschicht B).

Für die Dreischichtfolie wurden folgende Gasdurchlässigkeiten ermittelt:

| | |
|---|---|
| Sauerstoff (O₂): | 15,5 cm³/m² d |
| Kohlendioxid (CO₂): | 2,1 cm³/m² d |

### Beispiel 3

### Herstellung einer Dreischichtfolie gemäß Ausführungsbeispiel 2 mit vorgemischter Mittelschicht (Schicht B)

Analog der in Ausführungsbeispiel 2 beschriebenen Vorgehensweise wurde eine Dreischichtfolie A-B-A mit PLA als Außenschicht (A) hergestellt. Für die Mittelschicht (B) wurde eine Vormischung aus dem gemäß Ausführungsbeispiel 1 hergestellten TPS-Granulat (90 Gew%) und PLA-Granulat (10 Gew.%) zubereitet, dem Einwellenextruder zugeführt und bei 150 bis 190 °C aufgeschmolzen. Der Extruder für die Mittelschicht lief mit 100 U/min bei einem Durchsatz von 25 kg/h und einem Massedruck von 120 bar. Parallel hierzu wurde im zweiten Einwellenextruder (Temperatur 185 - 200 °C, Drehzahl 20 U/min, Massedruck 130 bar, Durchsatz 10 kg/h) PLA aufgeschmolzen (Schmelzetemperatur 175 °C). Beide Schmelzen wurden im Coex-Adapter vereinigt, wobei, wie in Ausführungsbeispiel 2 beschrieben, der PLA-Schmelzestrom aufgeteilt und je hälftig über bzw. unter die Stärkeschicht geführt wurde (-> Außenschichten A). Das so erzeugte Dreischichtsystem wurde durch eine Breitschlitzdüse (T = 190 °C) mittels temperierbarer Walzen (T = 35 °C, V = 2,7 m/min) abgezogen, auf Breite geschnitten und zur Rolle gewickelt.

Die Gesamtdicke 400 µm der so erzeugten Dreischichtfolie setzte sich zusammen aus 2 x 50 µm (Außenschichten A) und 300 µm (Mittelschicht B).

Die Dreischichtfolie zeigte eine im Vergleich zu Ausführungsbeispiel 2 stärkere Eintrübung, jedoch wurde ein im Vergleich zu Ausführungsbeispiel 2 stabilerer Verbund zwischen den Außenschichten (A) und der Mittelschicht (B) erzielt.

### Beispiel 4

### Herstellung einer modifizierten thermoplastischen Stärke für die Mittelschicht (Schicht B)

Ein Gemisch aus nativer Kartoffelstärke (56,5 Gew%), Glycerin (20,5 %), Sorbitol (13 %) und PLA (10 %) wurde in einen Zweiwellenextruder eingefüllt. Das Gemisch wurde im Extruder in einem Temperaturbereich von 130 bis 160 °C intensiv gemischt, wobei die Schmelze gleichzeitig entgast wurde um dem Gemisch Wasser zu entziehen. Ähnlich wie in Ausführungsbeispiel 1 entsteht eine homogene Schmelze die abgezogen und granuliert werden kann. Der Wassergehalt der in der beschriebenen Weise homogenisierten, thermoplastisch verarbeitbaren Masse liegt zwischen 3 und 4 Gew%.

### Beispiel 5

### Herstellung einer Dreischichtfolie gemäß Anwendungsbeispiel 2 mit veränderter thermoplastischer Stärke in der Mittelschicht (Schicht B)

Analog der in den Anwendungsbeispielen 2 und 3 beschriebenen Vorgehensweise wurde eine Dreischichtfolie A-B-A mit PLA als Außenschicht (A) hergestellt. Für die Mittelschicht (B) wurde der in Ausführungsbeispiel 4 beschriebene, thermoplastisch verarbeitbare Stärke/PLA-Compound dem Extruder zugeführt und bei 140 bis 195 °C aufgeschmolzen. Der Extruder für die Mittelschicht lief mit 90 U/min bei einem Durchsatz von 25 kg/h und einem Massedruck von 115 bar.

Parallel hierzu wurde im zweiten Einwellenextruder (Temperatur 190 - 200 °C, Drehzahl 25 U/min, Massedruck 120 bar, Durchsatz 10 kg/h) PLA aufgeschmolzen (Schmelzetemperatur 180 °C).

Beide Schmelzen wurden im Coex-Adapter vereinigt, wobei, wie in den Ausführungsbeispielen 2 und 3 beschrieben, der PLA-Schmelzestrom aufgeteilt und je hälftig über bzw. unter die Stärkeschicht geführt wurde (-> Außenschichten A). Das so erzeugte Dreischichtsystem wurde durch eine Breitschlitzdüse (T = 185 °C) mittels temperierbarer Walzen (T = 35 °C, V = 3,1 m/min) abgezogen, auf Breite geschnitten und zur Rolle gewickelt.

Die Gesamtdicke 400 µm der so erzeugten Dreischichtfolie setzte sich zusammen aus 2 x 50 µm (Außenschichten A) und 300 µm (Mittelschicht B).

Die Dreischichtfolie zeigte eine im Vergleich zu den gemäß Ausführungsbeispielen 2 und 3 gefertigten Mustern stärkere Eintrübung, jedoch wurde ein im Vergleich zu den Ausführungsbeispielen 2 und 3 stabilerer Verbund zwischen den Außenschichten A und der Mittelschicht B erzielt.

### Beispiel 6

Wie Beispiel 2, jedoch wurde der Polymilchsäure (PLA) für die Außenschicht ein mit etwa 3 Gew.% Maleinsäureanhydrid funktionalisiertes Ethylen/Methylacrylat-Polymer in einer Menge von etwa 1 Gew.%, bezogen auf die Gesamtzusammensetzung der PLA-Schicht, zugegeben. Die so erhaltene Dreischichtfolie wies einen im Vergleich zu dem in Beispiel 2 beschriebenen Produkt erhöhten Verbund zwischen den einzelnen Schichten auf.

### Beispiel 7

### Herstellung einer Dreischichtfolie (Blasfolie)

Hergestellt wurde eine Dreischichtfolie (A-B-A), bestehend aus Polymilchsäure (PLA) / thermoplastischer Stärke (TPS) / PLA. Als Stärke wurde die in Ausführungsbeispiel 1 hergestellte, thermoplastische Glycerin/Sorbitol-Stärke mit einem Wassergehalt von 3 bis 4 Gew% verwendet. Die eingesetzte Polymilchsäure (PLA-Granulat, *Nature Works*) wies einen D-Anteil von 1,4 % auf.

Die beiden Materialien (PLA und TPS) wurden simultan mit einer Coextrusionsanlage zur Dreischichtfolie gefahren. Hierzu wurde die TPS in einem Einwellenextruder (Dr. Collin Ø 45 x 25 D) in einem Temperaturbereich von 140 bis 160 °C aufgeschmolzen. Der Extruder lief mit einer Drehzahl von 20 U/min und erzeugte, bei einem Durchsatz von ca. 7 kg/h, einen Massedruck von 130 bar. Parallel hierzu wurde in einem zweiten Einwellenextruder (Dr. Collin Ø 30 x 25 D, Temperatur 160 - 190 °C, Drehzahl 60 U/min, Massedruck 140 bar, Durchsatz ca. 15 kg/h) PLA aufgeschmolzen. Beide Schmelzen wurden in einer Ringdüse (Dreischichtblasdüse 0 80 mm, Ringspalt 1,1 mm) vereinigt, wobei der PLA-Schmelzestrom aufgeteilt und je hälftig über bzw. unter die Stärkeschicht geführt wurde (-> Außenschichten A). Das so erzeugte Dreischichtsystem wurde mit einem Aufblasverhältnis von 3,5 und einer Geschwindigkeit von ca. 4,5 m/min als Schlauch mit einer Foliengesamtdicke von ca. 50 µm und einer Liegebreite von 325 mm über je eine verchromte und gummierte Walze (Breite je 400 mm) abgezogen und zur Rolle gewickelt. Das prozentuale Dickenverhältnis der erhaltenen Mehrschichtfolie A-B-A wurde zu 20-60-20 ermittelt.

### Beispiel 8

Wie Beispiel 7, jedoch wurde der Polymilchsäure (PLA) für die Außenschicht ein mit etwa 3 Gew.% Maleinsäureanhydrid funktionalisiertes Ethylen/Methylacrylat-Polymer in einer Menge von etwa 1 Gew.%, bezogen auf die Gesamtzusammensetzung der PLA-Schicht, zugegeben. Die so erhaltene Dreischichtfolie wies einen im Vergleich zu dem in Beispiel 7 beschriebenen Produkt erhöhten Verbund zwischen den einzelnen Schichten auf.

### Beispiel 9

Wie Beispiel 8, jedoch wurde der Polymilchsäure (PLA) für die Außenschicht zusätzlich 5 Gew.%, bezogen auf die Gesamtzusammensetzung der PLA-Schicht, aliphatisch/aromatischer Copolyester (ECOFLEX® der BASF AG) zugegeben. Das so erhaltene System wies eine im Vergleich zur Rezeptur gemäß Beispiel 13 bessere Verarbeitbarkeit auf.

### Beispiel 10

Vorgehensweise gemäß Beispiel 7, jedoch wurde eine gemäß Ausführungsbeispiel 1 hergestellte thermoplastische Glycerin/Sorbitol-Stärke mit einen Wassergehalt von etwa 2,5 Gew% eingesetzt. Das so erhaltene System wies gegenüber Beispiel 7 eine verbesserte Verarbeitbarkeit im Extruder und eine geringere Bläschenbildung in der Mittelschicht auf.

Die Erfindung ist vorstehend anhand von Ausführungsbeispielen exemplarisch beschrieben worden. Dabei versteht sich, dass die Erfindung nicht auf die beschriebenen Ausführungsbeispiele beschränkt ist. Vielmehr ergeben sich für den Fachmann im Rahmen der Erfindung vielfältige Abwandlungs- und Modifikationsmöglichkeiten und der Schutzumfang der Erfindung wird insbesondere durch die nachfolgenden Patentansprüche festgelegt.

## Patentansprüche

1. Mehrschichtfolie, insbesondere für Verpackungszwecke, umfassend mindestens eine erste Schicht A und mindestens eine zweite Schicht B, wobei die Schicht B thermoplastische Stärke enthält und die Schicht A thermoplastischen Polyester und mindestens ein Verarbeitungshilfsmittel in einer Menge von bis zu 5 Gew.% bezogen auf die Gesamtzusammensetzung der Schicht A enthält, wobei das Verarbeitungshilfsmittel ausgewählt ist aus Polymeren, die ein Polymergerüst aufweisen, welches mit reaktiven Gruppen modifiziert ist, wobei das Polymer des Polymergerüsts mit mindestens einer Polymerkomponente der Schicht A der Mehrschichtfolie mischbar und die reaktiven Gruppen geeignet sind mit mindestens einer Polymerkomponente der Schicht B der Mehrschichtfolie chemisch zu reagieren.

2. Mehrschichtfolie.nach Anspruch 1, **dadurch gekennzeichnet, dass** der in der Schicht A enthaltene thermoplastische Polyester ein gemäß EN 13432 biologisch abbaubarer thermoplastischer Polyester ist.

3. Mehrschichtfolie nach einem der vorstehenden Ansprüche, **dadurch gekennzeichnet, dass** der thermoplastische Polyester ein Biopolymer auf Basis einer oder mehrerer Polyhydroxycarbonsäuren ist.

4. Mehrschichtfolie nach einem der vorstehenden Ansprüche, **dadurch gekennzeichnet, dass** der thermoplastische Polyester ausgewählt ist aus der Gruppe bestehend aus Poly[hydroxalkanoaten] (PHA); Poly[alkylensuccinaten] (PAS) wie z.B. Poly[butylensuccinat] (PBS), Poly[alkylenterephtalten] (PAT) wie z.B. Poly[ethylenterephthalat (PET), aliphatisch-aromatischen Copolyestern und Poly[p-dioxanon] (PPDO) sowie Copolymere und Mischungen hiervon.

5. Mehrschichtfolie nach Anspruch 4, **dadurch gekennzeichnet, dass** das Poly[hydroxalkanoat] (PHA) ausgewählt ist aus der Gruppe bestehend aus Poly[hydroxyethanoat] (z.B. Polyglycolsäure, PGA), Poly[hydroxypropanoat] (z.B. Polymilchsäure, Polylactid, PLA), Poly[hydroxybutanoat] (z.B. Polyhydroxybuttersäure, PHB), Poly[hydroxypentarloat] (z.B. Polyhydroxyvalerat, PHV) und Poly[hydroxyhexanoat] (z.B. Polycaprolacton, PCL) sowie Copolymere und Mischungen hiervon.

6. Mehrschichtfolie nach einem der vorstehenden Ansprüche, **dadurch gekennzeichnet, dass** die Schicht B erhalten wird mindestens teilweise ausgehend von thermoplastisch verarbeitbarer Stärke mit einem Wassergehalt von weniger 6 Gew.%, vorzugsweise weniger als 3 Gew.%, bezogen auf die Gesamtzusammensetzung der Stärke.

7. Mehrschichtfolie nach einem der vorstehenden Ansprüche, **dadurch gekennzeichnet, dass** die Schicht B eine thermoplastische Stärke enthält, welche **dadurch** charakterisiert ist, dass eine aus der thermoplastischen Stärke hergestellte Folie eine Zugfestigkeit gemäß DIN 53455 von 2 bis 10 N/mm², insbesondere von 4 bis 8 N/mm^{2,} und/oder eine Reißdehnung gemäß DIN 53455 von 80 bis 200 %, insbesondere von 120 bis 180 %, aufweist.

8. Mehrschichtfolie nach einem der vorstehenden Ansprüche, **dadurch gekennzeichnet, dass** die thermoplastische Stärke erhältlich ist durch (a) Mischen von Stärke und/oder einem Stärkederivat mit mindestens 15 Gew.% eines Weichmachers wie zum Beispiel Glycerin und/oder Sorbitol, (b) Zuführen von thermischer und/oder mechanischer Energie und (c) wenigstens teilweiser Entfernen des natürlichen Wassergehalts der Stärke oder des Stärkederivats auf einen Wassergehalt von weniger 6 Gew.%.

9. Mehrschichtfolie nach einem der vorstehenden Ansprüche, **dadurch gekennzeichnet, dass** die Schicht A im wesentlichen aus thermoplastischen Polyester und/oder die Schicht B im Wesentlichen aus thermoplastischer Stärke besteht.

10. Mehrschichtfolie nach einem der vorstehenden Ansprüche, **dadurch gekennzeichnet, dass** die Schicht B im Wesentlichen aus einem Polymer-Blend besteht, welches thermoplastische Stärke und mindestens ein weiteres thermoplastisches Material, insbesondere thermoplastischen Polyester, enthält.

11. Mehrschichtfolie nach Anspruch 10, **dadurch gekennzeichnet, dass** das weitere thermoplastische Material in dem Polymer-Blend in einer Menge von 1 bis 80 Gew.%, insbesondere 5 bis 30 Gew.%, bezogen auf das Gesamtgewicht des Polymer-Blends, enthalten ist.

12. Mehrschichtfolie nach Anspruch 10 oder 11, **dadurch gekennzeichnet, dass** das weitere thermoplastische Material in dem Polymer-Blend in Form von Rezyklat der Mehrschichtfolie enthalten ist.

13. Mehrschichtfolie nach einem der vorstehenden Ansprüche, **dadurch gekennzeichnet, dass** die Folie eine Gesamtdicke von 100 bis 2000 µm, insbesondere 200 bis 800 µm, besitzt.

14. Mehrschichtfolie nach einem der vorstehenden Ansprüche, **dadurch gekennzeichnet, dass** die einzelnen Schichten jeweils eine Dicke von 10 bis 1000 µm, insbesondere 10 bis 700 µm, besitzen.

15. Mehrschichtfolie nach einem der vorstehenden Anspüche, **dadurch gekennzeichnet, dass** die Folie eine Dreischichtenfolie mit folgendem Schichtenaufbau ist: Schicht A - Schicht B - Schacht A.

16. Mehrschichtfolie nach einem der vorstehenden Ansprüche, **dadurch gekennzeichnet, dass** zwischen der Schicht A und der Schicht B mindestens eine Haftvermittlerschicht H, insbesondere eine Haftvermittlerschicht H aus Blockcopolymer, vorgesehen ist.

17. Mehrschichtfolie nach einem der vorstehenden Anspüche, **dadurch** gekenntzeichnet, dass die Folie eine Dreischichtenfolie mit folgendem Schichtenaufbau ist: Schicht A - Haftvermittlerschicht H - Schicht B - Haftvermittlerschicht H - Schicht A.

18. Mehrschichtfolie nach einem der vorstehenden Ansprüche, **dadurch gekennzeichnet, dass** die Folie eine Zugfestigkeit gemäß DIN 53455 von 10 bis 40, insbesondere 15 bis 30 N/mm² aufweist.

19. Mehrschichtfolie nach einem der vorstehenden Ansprüche, **dadurch gekennzeichnet, dass** die Folie eine Sauerstoffdurchlässigkeit nach ASTM F 1927-98 bei 23 °C, 50 % r.F. und 400 µm Foliendicke von 1 bis 50, insbesondere 1,5 bis 20 cm³/m² d, aufweist.

20. Mehrschichtfolie nach einem der vorstehenden Ansprüche, **dadurch gekennzeichnet, dass** die Folie eine Wasserdampfdurchlässigkeit nach ASTM F 1249 bei 23 °C, 75 r.F. und 400 µm Foliendicke von 1 bis 100, insbesondere 2 bis 10 cm³/m² d aufweist.

21. Mehrschichtfolie nach einem der vorstehenden Anspruche, **dadurch gekennzeichnet, dass** die Folie eine Kohlendioxiddurchlässigkeit nach ASTM D 1434 bei 23 °C, 50 r.F. und 400 µm Foliendicke von 0,5 bis 5, insbesondere 1 bis 2, 5 cm³/m² d aufweist .

22. Mehrschichtfolie nach einem der vorstehenden Ansprüche, **dadurch gekennzeichnet, dass** mindestens eine Schicht der Folie durch Extrusion, insbesondere durch Blasfolienextrusion, Flachfolienextrusion, Cast-Folien-Extrusion und/oder Blasformen, gebildet ist.

23. Mehrschichtfolie nach einem der vorstehenden Ansprüche, **dadurch gekennzeichnet, dass** sämtliche Schichten der Folie durch Extrusion, insbesondere durch Blasfolienextrusion, Flachfolienextrusion und/oder Blasformen, gebildet ist.

24. Mehrschichtfolie nach einem der vorstehenden Ansprüche, **dadurch gekennzeichnet, dass** die Folie durch Coextrusion gebildet wird.

25. Verfahren zur Herstellung einer Mehrschichtfolie nach einem der vorstehenden Ansprüche, wobei die Mehrschichtfolie mindestens eine Schicht A, mindestens eine Schicht B sowie gegebenenfalls weitere Schichten, insbesondere gegebenenfalls mindestens eine weitere Schicht A, umfasst, **gekennzeichnet durch**:
(a) Extrudieren eines Materials enthaltend mindestens einen thermoplastischen Polyester zu einer Folie, wodurch mindestens eine schicht A gebildet wird;
(b) Extrudieren eines Materials enthaltend thermoplastisch verarbeitbare Stärke zu einer Folie, wodurch mindestens eine Schicht B gebildet wird; und
(c) zumindest teilweises flächiges Verbinden der einzelnen Schichten, wodurch eine Mehrschichtfolie gebildet wird.

26. Verfahren nach Anspruch 25, **dadurch** gekenntzeichnet, dass die Verfahrensschritte (a) bis (c) simultan im Coextrusionsverfahren durchgeführt werden, insbesondere durch Blasfolienextrusion, Flachfolienextrusion, Cast-Polien--Extrusion und/oder Blasformen.

27. Verfahren nach Anspruch 25 oder 26, **dadurch gekennzeichnet, dass** die Mehrschichtfolie je nach Anwendungszweck nach ihrer Herstellung in Teile mit den gewünschten Abmessungen geschnitten wird.

28. Verfahren nach Anspruch 27, **dadurch gekennzeichnet, dass** die beim Zuschnitt anfallenden Schnittreste zumindest teilweise dem Material für die Extrusion von Schicht B in Schritt (b) zugeführt wird.

29. Verbackung für Lebensmittel, insbesondere für Frischfleische Backwaren, Käse, frisches Obst oder Gemüse, Getränke und/oder Kaffee, umfassend eine Mehrschichtfolie nach einem der Ansprüche 1 bis 24.

## Claims

1. Multilayer film, in particular for packaging purposes, comprising at least one first layer A and at least one second layer B, wherein layer B contains thermoplastic starch and layer A contains thermoplastic polyester and at least one processing agent in an amount of up to 5% by weight based on the total composition of layer A, wherein the processing agent is selected from polymers comprising a polymer backbone that is modified with reactive groups, wherein the polymer of the polymer backbone is miscible with at least one polymer component of layer A of the multilayer film and the reactive groups are suitable for reacting chemically with at least one polymer component of layer B of the multilayer film.

2. Multilayer film according to claim 1, **characterised in that** the thermoplastic polyester contained in layer A is a biodegradable thermoplastic polyester according to EN 13432.

3. Multilayer film according to either of the preceding claims, **characterised in that** the thermoplastic polyester is a biopolymer based on one or more polyhydroxy carboxylic acids.

4. Multilayer film according to any one of the preceding claims, **characterised in that** the thermoplastic polyester is selected from the group consisting of poly[hydroxyalkanoates] (PHA), poly[alkylene succinates] (PAS) such as poly[butylene succinate] (PBS), poly[alkylene terephthalates] (PAT) such as poly[ethylene terephthalate] (PET), aliphatic-aromatic copolyesters, poly[p-dioxanon] (PPDO), and copolymers and mixtures thereof.

5. Multilayer film according to claim 4, **characterised in that** the poly[hydroxyalkanoate] (PHA) is selected from the group consisting of poly[hydroxyethanoate] (for example polyglycolic acid, PGA), poly[hydroxypropanoate] (for example polylactic acid, polylactide, PLA), poly[hydroxybutanoate] (for example polyhydroxy butanoic acid, PHB), poly[hydroxypentanoate] (for example polyhydroxyvalerate, PHV) and poly[hydroxyhexanoate] (for example polycaprolactone, PCL), and copolymers and mixtures thereof.

6. Multilayer film according to any one of the preceding claims, **characterised in that** layer B is obtained starting at least in part from thermoplastically processable starch having a water content of less than 6% by weight, preferably less than 3% by weight, based on the total composition of the starch.

7. Multilayer film according to any one of the preceding claims, **characterised in that** layer B contains a thermoplastic starch which is distinguished so that a film manufactured from the thermoplastic starch has a tensile strength according to DIN 53455 of 2 to 10 N/mm², in particular 4 to 8 N/mm², and/or an elongation at break according to DIN 53455 of 80 to 200%, in particular 120 to 180%.

8. Multilayer film according to any one of the preceding claims, **characterised in that** the thermoplastic starch is obtainable by (a) mixing starch and/or a starch derivative with at least 15% by weight of a plasticiser, such as for example glycerine and/or sorbitol, (b) applying thermal and/or mechanical energy, and (c) at least partially removing the natural water content of the starch or starch derivative to a water content of less than 6% by weight.

9. Multilayer film according to any one of the preceding claims, **characterised in that** layer A consists substantially of thermoplastic polyester and/or layer B consists substantially of thermoplastic starch.

10. Multilayer film according to any one of the preceding claims, **characterised in that** layer B consists substantially of a polymer blend containing thermoplastic starch and at least one further thermoplastic material, in particular thermoplastic polyester.

11. Multilayer film according to claim 10, **characterised in that** the further thermoplastic material is contained in the polymer blend in an amount of 1 to 80% by weight, in particular 5 to 30% by weight, based on the total weight of the polymer blend.

12. Multilayer film according to claim 10 or 11, **characterised in that** the further thermoplastic material is contained in the polymer blend as a recyclate of the multilayer film.

13. Multilayer film according to any one of the preceding claims, **characterised in that** the film has a total thickness of 100 to 2000 µm, in particular 200 to 800 µm.

14. Multilayer film according to any one of the preceding claims, **characterised in that** the individual layers each have a thickness of 10 to 1000 µm, in particular 10 to 700 µm.

15. Multilayer film according to any one of the preceding claims, **characterised in that** the film is a three-layer film with the following layer structure: layer A - layer B - layer A.

16. Multilayer film according to any one of the preceding claims, **characterised in that** provided between layer A and layer B is at least one tie layer H, in particular a tie layer H comprising block copolymer.

17. Multilayer film according to any one of the preceding claims, **characterised in that** the film is a three-layer film with the following layer structure: layer A - tie layer H - layer B - tie layer H - layer A.

18. Multilayer film according to any one of the preceding claims, **characterised in that** the film has a tensile strength according to DIN 53455 of 10 to 40, in particular of 15 to 30 N/mm².

19. Multilayer film according to any one of the preceding claims, **characterised in that** the film has an oxygen permeability according to ASTM F 1927-98 at 23 °C, 50% r.h. and 400 µm film thickness of 1 to 50, in particular 1.5 to 20 cm³/m² d.

20. Multilayer film according to any one of the preceding claims, **characterised in that** the film has a water vapour permeability according to ASTM F 1249 at 23 °C, 75% r.h. and 400 µm film thickness of 1 to 100, in particular 2 to 10 cm³/m² d.

21. Multilayer film according to any one of the preceding claims, **characterised in that** the film has
a carbon dioxide permeability according to ASTM D 1434 at 23 °C, 50% r.h. and 400 µm film thickness of 0.5 to 5, in particular 1 to 2.5 cm³/m² d.

22. Multilayer film according to any one of the preceding claims, **characterised in that** at least one layer of the film is formed by extrusion, in particular by blown film extrusion, flat film extrusion, cast-film extrusion and/or blow moulding.

23. Multilayer film according to any one of the preceding claims, **characterised in that** all the layers of the film are formed by extrusion, in particular by blown film extrusion, flat film extrusion and/or blow moulding.

24. Multilayer film according to any one of the preceding claims, **characterised in that** the film is formed by coextrusion.

25. Method for manufacturing a multilayer film according to any one of the preceding claims, the multilayer film comprising at least one layer A, at least one layer B, and optionally additional layers, in particular optionally at least one further layer A, **characterised by**:
(a) extruding a material containing at least one thermoplastic polyester to form a film, whereby at least one layer A is formed;
(b) extruding a material containing thermoplastically processable starch to form a film, whereby at least one layer B is formed; and
(c) at least partially bonding a surface of the individual layers, whereby a multilayer film is formed.

26. Method according to claim 25, **characterised in that** method steps (a) to (c) are carried out simultaneously in a coextrusion process, in particular by blown film extrusion, flat film extrusion, cast-film extrusion, and/or blow moulding.

27. Method according to claim 25 or 26, **characterised in that** following its manufacture, the multilayer film is cut into parts having the desired dimensions, according to the application.

28. Method according to claim 27, **characterised in that** cutting residues which accumulate while cutting are added at least in part to the material used for extruding layer B in step (b).

29. Packaging for foodstuffs, in particular for fresh meat, baked goods, cheese, fresh fruit or vegetables, beverages and/or coffee, comprising a multilayer film according to any one of claims 1 to 24.

## Revendications

1. Feuille multicouche, destinée, en particulier, à servir d'emballage, laquelle comprend au moins une première couche A et au moins une deuxième couche B, la couche B contenant de l'amidon thermoplastique et la couche A du polyester thermoplastique et au moins un produit auxiliaire adjuvant dans une quantité allant jusqu'à 5 % en poids de la composition totale de la couche A, le produit auxiliaire adjuvant étant choisi parmi des polymères, qui comprennent un squelette polymérique, qui est modifié avec des groupes réactifs, le polymère du squelette polymérique étant miscible avec au moins un composant polymérique de la couche A de la feuille multicouche et les groupes réactifs étant apte à réagir chimiquement avec au moins un composant polymérique de la couche B de la feuille multicouche.

2. Feuille multicouche selon la revendication 1, **caractérisée en ce que** le polyester thermoplastique, contenu dans la couche A, est un polyester thermoplastique, dégradable biologiquement, conforme à l'EN 13432.

3. Feuille multicouche selon l'une des revendications précédentes, **caractérisée en ce que** le polyester thermoplastique est un polymère biologique à base d'un ou de plusieurs acides carboxyliques poly-hydroxyliques.

4. Feuille multicouche selon l'une des revendications précédentes, **caractérisée en ce que** le polyester thermoplastique est choisi dans le groupe comprenant les poly[hydroxalcanoates] (PHA), les poly[succinates d'alkylène] (PAS), comme, par exemple, le poly[succinate de butylène (PBS), les poly[téréphtalates d'alcoyle] (PAT), comme, par exemple, le poly[téréphtalate d'éthylène] (PET), les copolyesters aliphatiques aromatiques et poly[p-dioxanon] (PPDO), ainsi que les copolymères et des mélanges de ceux-ci.

5. Feuille multicouche selon la revendication 4, **caractérisée en ce que** le poly[hydroxalcanoat] (PHA) est choisi dans le groupe qui comprend le poly[éthanoate hydroxylique] (par exemple l'acide de polyglycol, PGA), poly[propanoat hydroxylique] (par exemple, polyacide lactique, polylactid, PLA), poly[butanoat hydroxylique] (par exemple polyacide butyrique, PAB), poly[pentanoat hydroxylique] (par exemple polyhydroxyvalérat, PHV), et poly[hydroxyhexanoat] (par exemple polycaprolacton, PCL), ainsi que des copolymères et des mélanges de ceux-ci.

6. Feuille multicouche selon l'une des revendications précédentes, **caractérisée en ce que** la couche B est obtenue, au moins partiellement, sur la base d'amidon soumis à un traitement thermoplastique, avec une teneur en eau inférieure à 6 % en poids, de préférence inférieure à 3 % en poids de la composition totale de l'amidon.

7. Feuille multicouche selon l'une des revendications précédentes, **caractérisée en ce que** la couche B contient de l'amidon thermoplastique, qui est **caractérisé en ce qu'**une feuille fabriquée avec l'amidon thermoplastique présente une résistance à la traction selon DIN 53455 de 2 à 10 N/mm², en particulier de 4 à 8 N/mm², et / ou une élongation à la rupture selon DIN 53455 de 80 à 200 %, en particulier de 120 à 180 %.

8. Feuille multicouche selon l'une des revendications précédentes, **caractérisée en ce que** l'amidon thermoplastique peut être obtenu par (a) mélange d'amidon et / ou d'un dérivé de l'amidon avec au moins 15 % en poids de plastifiant, comme, par exemple, de la glycérine et / ou du sorbitol, (b) apport d'énergie thermique et / ou mécanique et (c) élimination, au moins partielle, de la teneur naturelle en eau de l'amidon ou du dérivé d'amidon pour l'obtention d'une teneur en eau inférieure à 6 % en poids.

9. Feuille multicouche selon l'une des revendications précédentes, **caractérisée en ce que** la couche A consiste essentiellement en polyester thermoplastique et / ou que la couche B consiste essentiellement en amidon thermoplastique.

10. Feuille multicouche selon l'une des revendications précédentes, **caractérisée en ce que** la couche B consiste essentiellement en un mélange de polymères, qui contient de l'amidon thermoplastique et au moins une autre matière thermoplastique, en particulier du polyester thermoplastique.

11. Feuille multicouche selon la revendication 10, **caractérisée en ce que** l'autre matière thermoplastique est contenue dans le mélange de polymères en une quantité de 1 à 80 % en poids, en particulier de 5 à 30 % en poids par rapport au poids total du mélange de polymères.

12. Feuille multicouche selon revendication 10 ou 11, **caractérisée en ce que** l'autre matière thermoplastique est contenu dans le mélange de polymères sous la forme d'un produit de recyclage de la feuille multicouche.

13. Feuille multicouche selon l'une des revendications précédentes, **caractérisée en ce que** la feuille a une épaisseur totale de 100 à 2000 µm, en particulier de 200 à 800 µm.

14. Feuille multicouche selon l'une des revendications précédentes, **caractérisée en ce que** chacune des couches a une épaisseur de 10 à 1000 µm, en particulier de 10 à 700 µm

15. Feuille multicouche selon l'une des revendications précédentes, **caractérisée en ce que** la feuille est une feuille à trois couches, présentant la structure suivante : couche A - couche B - couche A.

16. Feuille multicouche selon l'une des revendications précédentes, **caractérisée en ce que**, entre la couche A et la couche B, est prévue au moins une couche à agent adhésif H, en particulier une couche agent adhésif H en copolymère à blocs.

17. Feuille multicouche selon l'une des revendications précédentes, **caractérisée en ce que** la feuille est une feuille à trois couches présentant la structure suivante : couche A - couche à agent adhésif H - couche B - couche à agent adhésif H - couche A.

18. Feuille multicouche selon la revendication 1, **caractérisée en ce que** la feuille présente une résistance à la traction selon DIN 53455 de 10 à 40, en particulier de 15 à 30 N/mm².

19. Feuille multicouche selon l'une des revendications précédentes, **caractérisée en ce que** la feuille présente, à une température de 23 °C, 50 % r.F. et pour une épaisseur de feuille de 400 µm, une perméabilité à l'oxygène selon ASTM F 1927-98 de 1 à 50, en particulier de 1,5 à 20 cm³ / m² d.

20. Feuille multicouche selon l'une des revendications précédentes, **caractérisée en ce que** la feuille présente, à 23 °C, 75 r.F. et pour une épaisseur de feuille de 400 µm, une perméabilité à la vapeur d'eau selon ASTM F 1249 de 1 à 100, en particulier de 2 à 10 cm³/m² d.

21. Feuille multicouche selon l'une des revendications précédentes, **caractérisée en ce que** la feuille présente, à 23 °C, 50 r.F. et pour une épaisseur de feuille de 400 µm, une perméabilité au dioxyde de carbone selon ASTM D 1434 de 0,5 à 5, en particulier de 1 à 2,5 cm³/m² d.

22. Feuille multicouche selon l'une des revendications précédentes, **caractérisée en ce qu'**au moins une couche de la feuille est obtenue par extrusion, en particulier par extrusion de pellicule soufflée, extrusion de feuille à plat, extrusion de feuille coulée et / ou par formage par soufflage.

23. Feuille multicouche selon l'une des revendications précédentes, **caractérisée en ce que** toutes les couches de la feules sont formées par extrusion, en particulier pas extrusion de pellicule soufflée, extrusion de feuille à plat et / ou pas formage par soufflage.

24. Feuille multicouche selon l'une des revendications précédentes, **caractérisée en ce que** la feuille est formée par coextrusion.

25. Procédé pour la fabrication d'une feuille multicouche selon l'une des revendications précédentes, la feuille multicouche comprenant au moins une couche A, au moins une couche B, ainsi que, le cas échéant, d'autres couches, en particulier, le cas échéant, au moins une autre couche A, **caractérisé par** :
(a) extrusion d'une matière contenant au moins un polyester thermoplastique pour former une feuille, au moins une couche A étant ainsi formée;
(b) extrusion d'une matière contenant de l'amidon pouvant être soumis à un traitement thermoplastique pour l'obtention d'une feuille, au moins une couche B étant ainsi formée; et
(c) liaison en nappe, au moins partielle, des différentes couches, une feuille multicouche étant ainsi formée.

26. Procédé selon la revendication 25, **caractérisé en ce que** les étapes (a) à (c) du procédé sont exécutées simultanément selon le procédé de coextrusion, en particulier pas extrusion de pellicule soufflée, extrusion de feuille à plat, extrusion de feuille coulée et / ou formage par soufflage.

27. Procédé selon revendication 25 ou 26, **caractérisée en ce que** la feuille multicouche est coupée, après sa fabrication, en pièces de dimensions désirées selon les buts d'utilisation.

28. Procédé selon la revendication 27, **caractérisée en ce que** les restes résultant de la coupe, sont ajoutés, au moins partiellement, à la matière servant à l'extrusion de la couche B selon l'étape (b).

29. Emballage pour produits alimentaires, en particulier pour de la viande fraîche, des produits de boulangerie et pâtisserie, du fromage, des fruits ou des légumes frais, des boissons et / ou du café, qui comprend une feuille multicouche selon l'une des revendications 1 à 24.
